# EUROPEAN PATENT APPLICATION

(11) **EP 2 424 282 A1**
(43) Date of publication of application: **29.02.2012**
(21) Application number: 10766674.5
(22) Date of filing: 19.04.2010
(51) Int. Cl.: H04W 12/00, H04L 9/32, G06Q 30/00

(54) **SYSTEM AND METHOD FOR PERSONAL CERTIFICATION USING A MOBILE DEVICE**

(30) Priority: 20.04.2009 ES 200901024
(71) Applicant: Alter Core, S.L., 28002 Madrid (ES)
(72) Inventor: PEREZ SORIA, José María, 28002 Madrid (ES)
(74) Representative: Carvajal y Urquijo, Isabel
(86) International application number: PCT/ES2010/000168
(87) International publication number: WO 2010/122190

(57) **Abstract**

System and method for personal certification with respect to a service provider using a mobile device. The method comprises:
- providing the user of the mobile device (2) with a two-dimensional code (1), the information contained in said two-dimensional code (1) including encrypted original data which comprise an encrypted session key for certifying the user with respect to the service provider;
- the mobile device (2) obtaining an image containing the two-dimensional code (1) via image capturing means;
- the mobile device (2) obtaining the two-dimensional code (1) from said image;
- the two-dimensional code (1) being converted into a character code;
- the mobile device (2) obtaining the original data including the session key for certifying the user before the service provider from said character code, by applying a decryption process.

## Description

### Field of the invention

The present invention refers to the field of personal certification systems using mobile devices (for example, mobile phones).

### Background of the invention

Nowadays, with technologies applied to mobile devices, besides using the basic telephone and data services, there can be provided some other services which may facilitate performing of added value services. Nowadays, pictograms or two-dimensional codes are used for the decoding of information associated, mainly, to web page addresses. That is, two-dimensional codes only offer text-to-pictogram coded information in order to use mobile device cameras for the capture of said information and for its subsequent decoding and conversion into plain text, which can later be automatically,treated by the mobile device for local (database) or remote (webpage) access to the information by reference to said text. However, in no case has it been applied for performing authentication functions.

The present invention proposes using mobile devices provided with cameras to perform data authentication functions through the treatment of pictogram frames or two-dimensional codes of said data.

### Description of the invention

The invention refers to a method for personal certification before a service provider by means of a mobile device according to claim 1 and a system according to claim 9. Preferred embodiments of the system and method are defined in the dependent claims.

The mobile device must have image capturing means. The method comprises:
- providing the user of the mobile device with a two-dimensional code, the information contained in said two-dimensional code including encrypted original data which comprise an encrypted session key for certifying the user with respect to the service provider;
- the mobile device obtaining an image with the two-dimensional code via image capturing means;
- the mobile device obtaining the two-dimensional code from said image;
- the two-dimensional code being converted into a character code;
- the mobile device obtaining, from said character code and by means of applying a decryption process, the original data including the session key for certifying the user before the service provider.

In a preferred embodiment the two-dimensional code is previously generated by the service provider applying an encryption process on the original data comprising the session key, and a subsequent conversion of the characters obtained into a two-dimensional code.

The two-dimensional code is preferably a double-key encryption code, encrypted with a user's public key and the service provider private key, the decryption process comprising:
- obtaining, from the character code, the encrypted original data including the encrypted session key;
- decrypting the original data with the service provider public key;
- decrypting the previous result with the mobile device user's private key, obtaining the original data including the session key.

The process for generating the two-dimensional code is preferably performed by the service provider and comprises:
- generating a random session key;
- encrypting the original data including said session key with the user's public key;
- encrypting the result with the service provider private key;
- performing a two-dimensional coding of the previous result, obtaining the two-dimensional code including the encrypted original data which in turn comprise the encrypted session key.

The method may further comprise showing the user the obtained session key on the mobile device display, and optionally entering the obtained session key in a terminal connected to the service provider to obtain the certification.

In a preferred embodiment the method may further comprise:
- the mobile device establishing a secure connection with a server of the service provider;
- the mobile device sending information for the user certification, including in said information at least the obtained session key.

The decryption process may also be performed by a cryptographic card connected to the mobile device.

The encrypted original data contained in the two-dimensional code may further comprise some of the following data:
- reference to the service or product
- reference to the service provider
- operation amount;
- date and time of the operation;
- service provider webpage address.

It is also an object of the present invention a system for the personal certification before a service provider using a mobile device, having the mobile device image capturing means. The system comprises said mobile device configured for:
- obtaining, through the image capturing means and from a two-dimensional code provided to the mobile device user, and which includes encrypted original data comprising an encrypted session key for performing the user certification before the service provider, an image containing said two-dimensional code;
- obtaining from said image the two-dimensional code;
- converting the two-dimensional code into a character code;
- obtaining, from said character code and applying a decryption process, the original data including the session key for performing the user certification before the service provider.

The system may further comprise a server of the service provider configured for generating the two-dimensional code by means of an encryption process on the original data which comprise the session key and a conversion of the characters obtained into a two-dimensional code.

The two-dimensional code is preferably a double-key encryption code, encrypted with a user's public key and a service provider private key, being the mobile device configured, within the decryption process, for:
- obtaining, from the character code, the encrypted original data including the encrypted session key;
- decrypting the original data with the service provider public key;
- decrypting the previous result with the mobile device user's private key, obtaining the original data including the session key.

The server of the service provider is preferably configured, within the process of generating the two-dimensional code, for:
- randomly generating a session key;
- encrypting the original data including said session key with the user public key;
- encrypting the result with the service provider private key;
- performing a two-dimensional coding of the previous result, obtaining the two-dimensional code which includes the encrypted original data which in turn comprise the encrypted session key.

The system may comprise a terminal connected to the server of the service provider, with display means configured for showing the user the two-dimensional code and with data entry means configured to enable the entering of a session key to obtain the user certification.

The mobile device may be further configured for:
- establishing a secure connection with a server of the service provider;
- sending information for the user certification, including in said information at least the session key obtained.

The mobile device may also be configured for performing the decryption process by means of a cryptographic card connected to the mobile device.

### Brief description of the drawings

The following is a brief description of a series of drawings which will help understand the invention better relating to an embodiment of said invention which is presented as a non-limiting example thereof.
Figure 1 shows the process of obtaining the two-dimensional code using data with double-key encryption.
Figure 2 represents the process of obtaining data from the two-dimensional code with double-key encryption.
Figure 3 represents the scheme of the generation of the two-dimensional code in the server of the provider with dynamic session key and double-key encryption.
Figure 4 shows an example of an access screen to the provider online service by means of a dynamic session key.
Figure 5 shows the access to the provider online service by means of a dynamic session key, specifically the capturing of the two-dimensional code by the mobile device.
Figure 6 represents a scheme of obtaining a dynamic session key from the two-dimensional code by the mobile device.
Figures 7A, 7B, and 7C show the certification operation by means of key presentation.
Figures 8A and 8B show the certification operation with mobile-server connection.
Figures 9A and 9B show the certification operation using the electronic ID.
Figure 10 shows the physical payment service with the presentation of a two-dimensional code at the point of sale terminal.
Figure 11 shows the physical payment service with two-dimensional code on a purchase receipt.
Figure 12 represents the electronic bill payment service with two-dimensional code on screen.
Figure 13 shows a bill payment service with two-dimensional code on a printed bill.
Figure 14 shows an access control service with two-dimensional code on an access device.
Figure 15 shows the access to ATM services with personal certification using a dynamic session key generated by the mobile device.

### Description of a preferred embodiment of the invention

The system and method herein proposed consist of using the pictograms, or encoded two-dimensional codes, as a visual representation of the information, but whose content is not plain text but information encrypted by means of public key or asymmetric cryptography (for example, RSA); that is, it allows encrypting the information with a key and decrypting it with another key, pair of the previous one (private/public key pair).

In order to apply the method and system proposed any type of visual representation of data or information may be used, including two-dimensional codes, two-dimensional bar codes or any type of pictogram which can be captured and decoded by a digital mobile device.

Two-dimensional codes are symbols formed by a data matrix which allows for fast scanning of the information it contains. They may be recognized and interpreted by digital image capturing devices and subsequently used for different applications. There are multiple two-dimensional code types: Datamatrix, QR codes, Semacodes, Shotcodes, Bidi codes, Beetag, etc.

The maximum amount of information (characters) that may be contained in two-dimensional codes depends on the code size and on its redundancy level.

The combination of the pictograms or two-dimensional codes with the public key cryptography implies a double encoding: first, the information is encoded using public key cryptographic procedures performing a double encryption (encryption with a user's public key and a provider's private key) and, then, the result is encoded for obtaining a two-dimensional code.

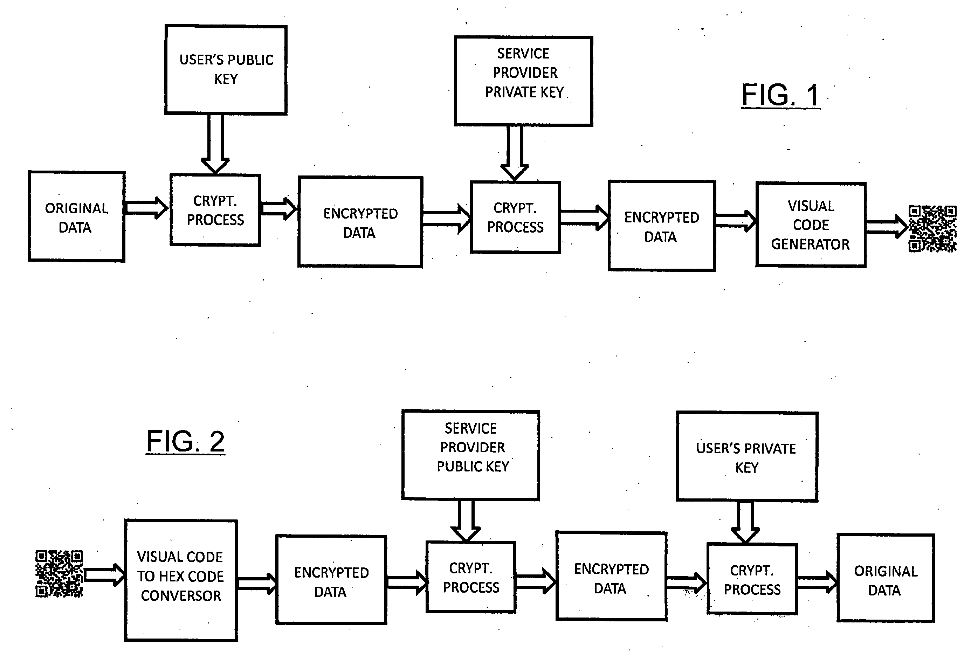

In other words, in order to perform the encoding of information with double encryption, the following steps must be performed, as shown in **Figure 1****:**
- Taking the original data and performing the encryption with the user's public key.
- Encrypting the result with the service provider private key.
- Performing the two-dimensional encoding of the result, obtaining a two-dimensional code 1.

In order to obtain the encrypted information, the following steps must be performed, as shown in **Figure 2****:**
- The first step consists of the visual decoding of the two-dimensional code 1 so as to convert it into a character code (for example, a hexadecimal, alphanumeric, ASCII, etc. code.).
- The result will be decrypted with the service provider public key.
- The original data that will only be known by the service provider and the user will be the consequence of decrypting the previous result with the user private key.

In this way, a double encryption is performed which ensures the mutual authentication between the provider of the service and the user thereof, guaranteeing end-to-end security of the authentication system (to be implemented on both physical and remote or mixed services)

There exist different examples of applications of the system object of the invention:
1. User certification system for secure access to online services.
2. User certification system for physical payment services.
3. User certification system for billing.
4. User certification system for physical access control.
5. User certification system for performing ATM operations.
6. User certification system for the payment of services, show tickets, fines, fees, taxes, etc.

### 1. User certification system for secure access to online services.

The online services offered through the open networks, such as the Internet, have the problem of the authentication of the users who access said services. Most systems used (for example electronic banking) for performing user identification are based on requesting users certain data which should only be known by the user himself/herself and the service provider. This is the case of requesting data related to the user identification and an access keyword or secret key.

However, according to the current regulations that govern the use of electronic signatures (in Spain, Act No. 59/2003 on Electronic Signatures (Ley 59/2003 de Firma Electronics)), there exists the possibility of reversing any online operation that does not use recognized electronic signature, as an authentication method for the transaction. That is to say that those operations using user identification methods based on data related to secret words or passwords may be rejected by users claiming that they did not make them. In case of dispute, judicially, the burden of proof that the transaction was effectively made shall lie on the service provider.

In the case of using authentication based on the use of recognized electronic signature for performing online operations, according to the Act on Electronic Signature, the transaction is assumed to have been made by the signatory user, unless said user unequivocally proves that he/she did not perform the operation. In other words, in case of dispute, judicially, the burden of proof for the transaction dispute will be provided by the service user. On the other hand, there exists an increasing tendency of fraud using phishing techniques.

The system consists of using a strong authentication model based on the public key cryptography and, specifically, of using the double-key encryption as a user certification method for performing online operations.

In other words, in order to generate the two-dimensional code of the session key with double-key encryption it is proposed the performance of a first encryption of the unique session data (comprising at least one random number as a unique session key, and possibly comprising the webpage address to prevent the use of phishing techniques, date and time to control the period during which the operation is valid and its time-out expiration, for security reasons) with the user's public key and next, the performance of a second encryption of the result of the previous operation, with the service provider private key. This result will be encoded for obtaining the two-dimensional code that includes the session key with double-key encryption.

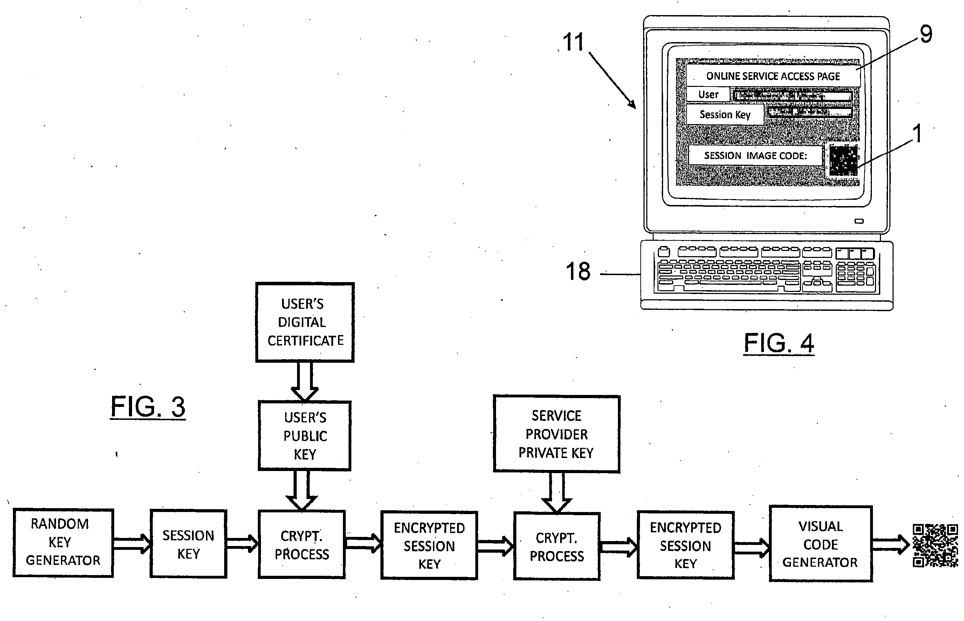

The generation of the two-dimensional code of the dynamic session key requires performing a double encryption of the data (including the random number or session key) with public key cryptography prior to performing the encoding of the two-dimensional code. The block diagram of the certification system proposed for the generation of the two-dimensional code is represented in **Figure 3****.**

On the user certification page the service provider will present, in the form of a two-dimensional code 1, the dynamic double-key encrypted session key for the certification in the system, as shown in **Figure 4****,** for example through a computer 11 monitor 9.

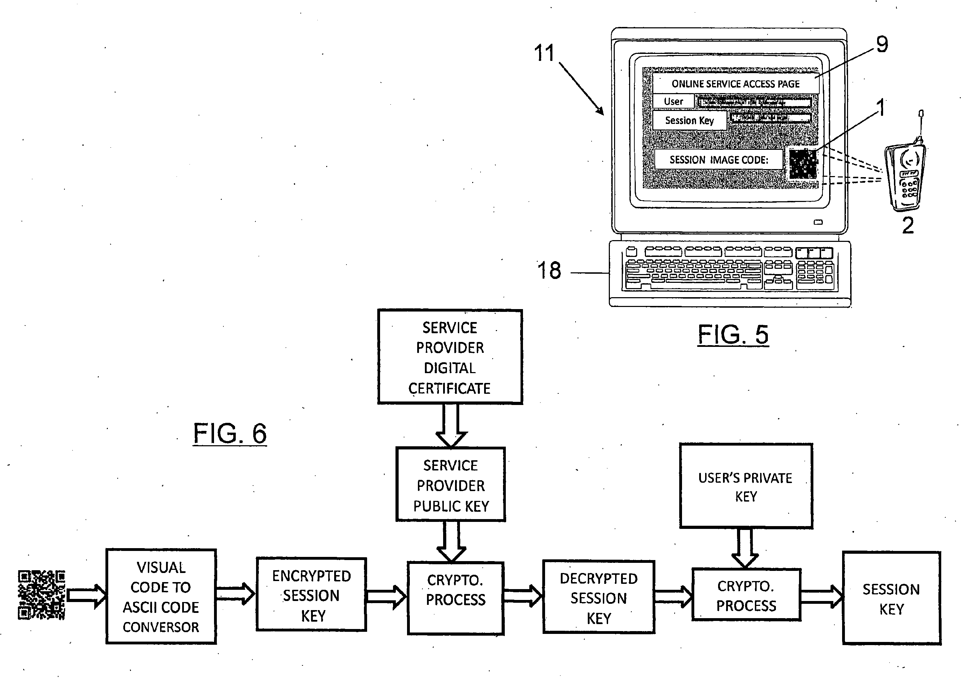

Obtaining the dynamic session key requires capturing the two-dimensional code 1 by means of the mobile device 2 camera, as shown in **Figure 5****,** performing the decoding of the two-dimensional code 1 prior to the double encryption with public key cryptography of the data containing said session key, as shown in **Figure 6****.** Both the digital certificate of the service provider of Figure 6 and the user's digital certificate of Figure 3 have the function of certifying the truthfulness of the public keys by a trusted third party within the context of a PKI (Public Key Infrastructure) System.

Besides the session key as basic information, the encrypted data in the two-dimensional code 1 may include certain additional information which may complement the security model of the proposed system, such as:
- Random number (session key), generated by the server.
- Service provider webpage address
- Date of transaction (time stamp for time-out control)
- Time of transaction (time stamp for time-out control)
- Other data (for example, transaction amount, user data, etc.)

The user certification in the system is performed by presenting the dynamic session key decoded on the screen and decrypted by the mobile device 2.

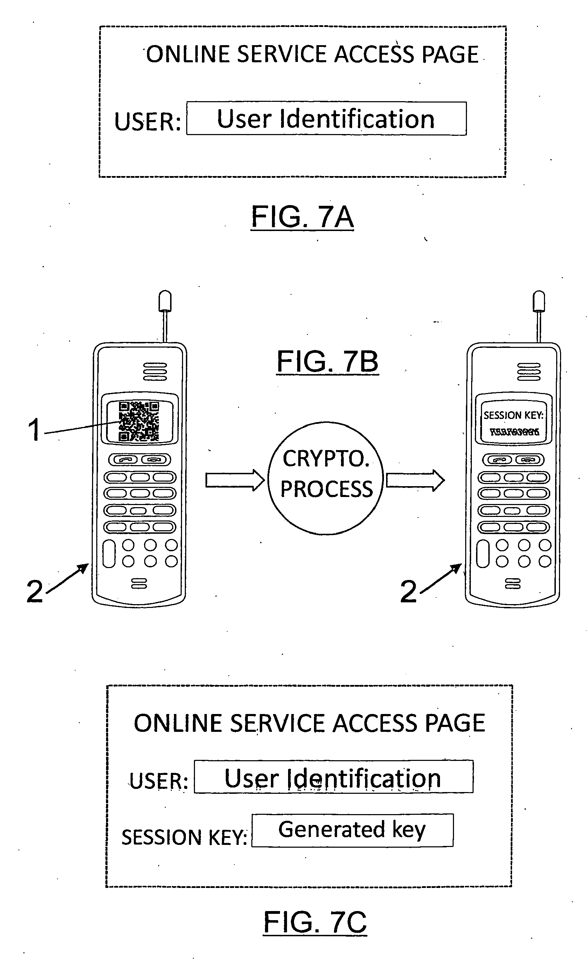

The following are the steps to be taken for performing the authentication required for the granting of access to the online service as shown in Figures 7A, 7B, and 7C:
1. Entering the appropriate user identification option into the required field **(****Figure 7A****):**
   a) Mobile phone number
   b) Personal ID number
   c) Email address
   d) User code provided by the Service Provider
   e) Any other User Identification code
2. Making a frame through the mobile device 2 of the two-dimensional session code 1 received from the server of the service provider **(****Figure 7B****)**. The cryptographic application installed in the mobile device 2 is in charge of generating a unique session key, which is shown on the screen.
3. Introducing the session code generated by the application of the mobile phone, in the required field **(****Figure 7C****)** on the computer 11 screen 9, for example through a keyboard 18 connected to the computer.

The user certification in the system can be performed through a mobile phone-server connection, that is, through the transmission of the operation information, including the dynamic session code decoded and decrypted, from the mobile device to the server of the service provider through an online connection.

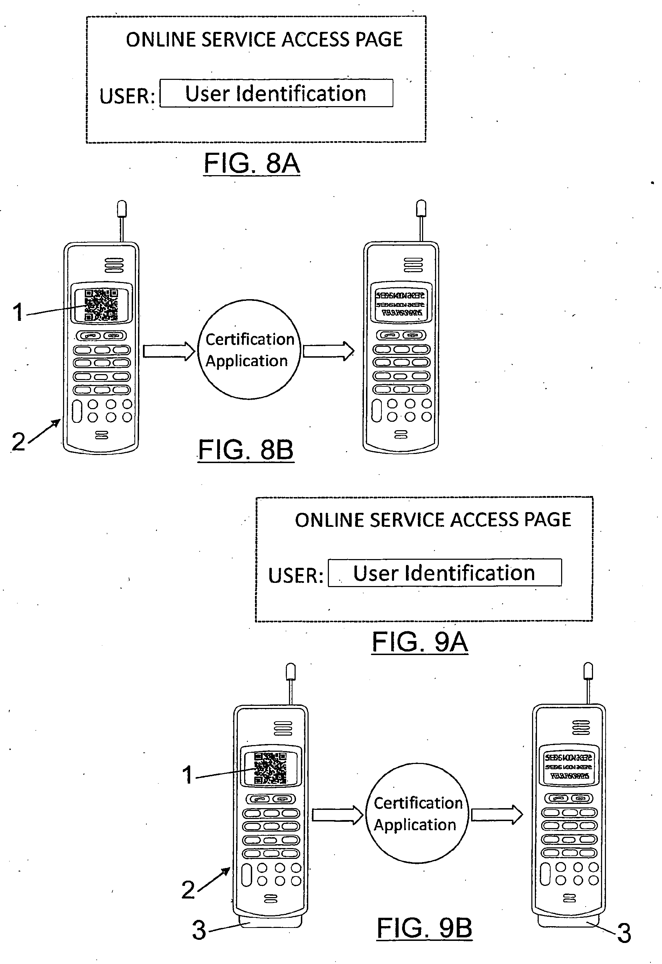

The following are the steps to be taken for performing the authentication required for granting access to the online service as shown in Figures 8A and 8B:
1. Entering the appropriate user identification option into the required field **(****Figure 8A****):**
   a) Mobile phone number
   b) Personal ID number
   c) Email address
   d) User code provided by the Service Provider
   e) Any other User Identification code
2. Making a frame through the mobile device 2 of the session two-dimensional code 1 received from the server of the service provider. The application executed by the device will produce a safe online connection with the server of the service provider, who will send the information regarding the certification operation, including the unique session code **(****Figure 8B****).**
3. The server of the service provider will verify the user data received through the connection in real time with his/her mobile device and, once the authentication thereof by the service is completed, it will grant access to the server.

The user certification in the system is performed in the events described above by the mobile device 2 (specifically, the certification application), but it can also be performed using an external cryptographic card 3, such as for example the electronic ID (through the appropriate wired or wireless direct interface of the cryptographic card 3 with the mobile device 2) for the management of keys and the execution of cryptographic processes, as shown in **Figures 9A and 9B****,** in order to perform the user certification with respect to the service provider, either through the presentation of the dynamic session key, or through the transmission of operation information, including the dynamic session key, from the mobile device to the server of the service provider.

The following are the steps to be taken for performing the authentication required for granting access to the online service:
1. Entering the appropriate user identification option into the required field (Figure 9A):
   a) Mobile phone number
   b) Personal ID number
   c) Email address
   d) User code provided by the Service Provider
   e) Any other User Identification code
2. Making a frame through the mobile device 2 of the two-dimensional session code 1 received from the server of the service provider. The application executed by the device uses the management of keys and cryptographic algorithms of the cryptographic card 3, and generates a unique session key for its presentation to the system or produces a secure online connection with the server of the service provider, who will send the information regarding the certification operation, including the unique session key (Figure 9B).
3. Introducing the session code generated by the application of the mobile phone 2 in the required field or transmitting to the server of the service provider the operation data, including the session key, for its verification in real time.

### 2. User certification system for physical payment services.

The system proposed based in the use of pictograms or two-dimensional codes can also be used to perform the certification of clients of shops in order to make secure physical electronic payments.

In order to facilitate the physical electronic payment in the shop, the point of sale terminal 4 (POS terminal) will be configured to show the dynamic two-dimensional code 1 linked to the payment transaction (including the amount, date and time, number of shop and double-key encryption dynamic code issued by the financial institution).

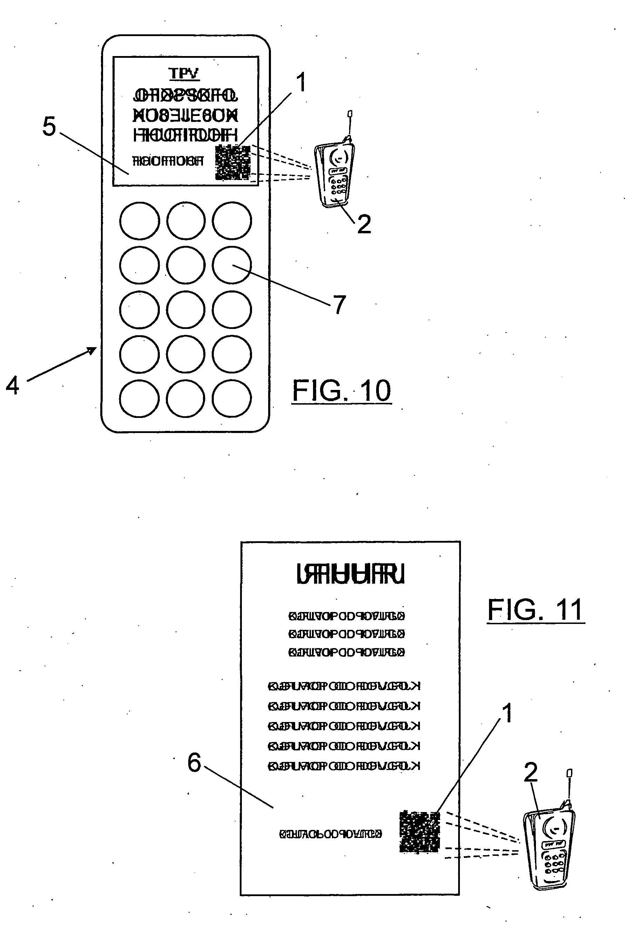

The client will take a frame of the two-dimensional code 1 shown on the screen 5 of the POS terminal 4 **(****Figure 10****),** or of the printed receipt 6 in which the pictogram will appear **(****Figure 11****),** besides the data associated to the purchase operation (amount, date and time, number of shop and description of the purchased items, etc.).

Next, the certification or authentication application of the mobile device 2 will produce a session key to be presented through the keyboard 7 to the POS terminal 4 or it will connect in real time to the server of the financial institution to resolve the payment authorization application.

The resolution of the physical payment authorization application will be sent to the POS terminal 4 of the shop and, in the event that the mobile device is connected to the server of the financial institution, the user will also receive the resolution of the operation in the mobile device 2 itself.

Likewise, the model proposed for the physical payment is compatible with the use of a cryptographic card 3 (for example, electronic ID) as it was described above.

### 3. User certification system for billing.

Another reference application of the system proposed consists of the use of the two-dimensional code 1 with double encryption for the unequivocal identification of an invoice 8 and, in this way, thus allowing the automatic payment thereof, facilitating a connection to the client electronic banking system using the procedure described above for the certification of users for secure access to online services.

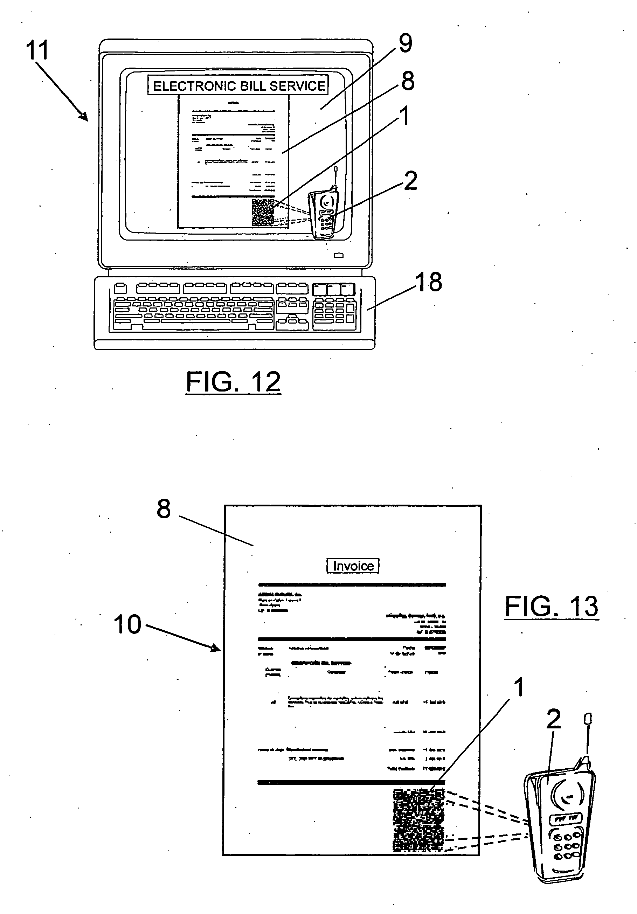

The invoice can be seen both on the screen of a terminal shown in **Figure 12** (such as for example a computer 11 monitor 9) and on a printed piece of paper 10 **(****Figure 13****),** so that the two-dimensional code with double encryption can be captured by the mobile device and, once the certification application is executed, the session key is presented or the data related to the server operation is sent in real time for its authorization.

Likewise, the model proposed for bill payment will be compatible with the use of a cryptographic card 3 (electronic ID), as it was described above.

### 4. User certification system for physical access control.

The system using two-dimensional codes with double encryption can be used for the management of physical access control with the presentation of the dynamic key, or with the transmission of the authentication data to the physical access control management system.

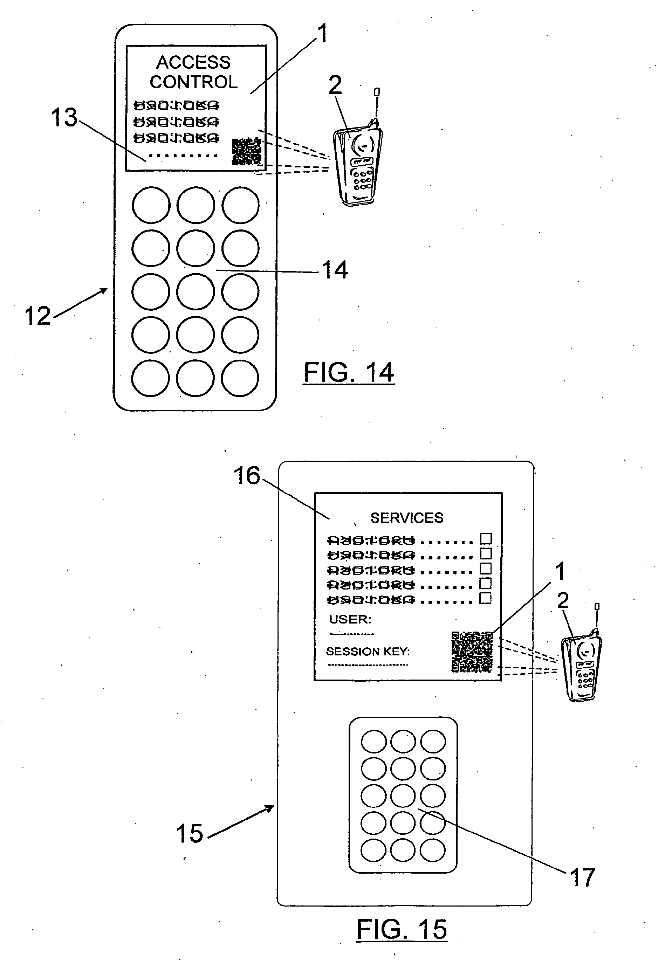

In a similar way to the physical payments in the POS terminal, the two-dimensional code 1 linked to the access is presented on the screen 13 of the access terminal 12, said code will include the dynamic code with double encryption issued by the security institution in charge of the access control. The user will take a photograph of the two-dimensional code 1 shown on the screen 13 **(****Figure 14****).** Next, the certification or authentication application of the mobile device 2 will generate a session key to be submitted through the keyboard 14 to the access terminal 12, or it will connect in real time with the server of the server of the security institution for the resolution of the access authorization application, granting or refusing access.

Likewise, the model proposed for physical access control will be compatible with the use of a cryptographic card 3 (electronic ID), as it was described above.

### 5. User certification system for performing ATM operations.

As shown in **Figure 15****,** the system described can be used as a personal certification procedure to perform ATM 15 operations, such as money refunds, transfers, phone card recharges, bill payment, etc.

In a similar way to the procedure used for secure access to online services, the two-dimensional code 1 (among whose data there is a session key with double encryption for the user's public key and the private key of the financial institution) generated by the financial institution will be shown on the screen 16 of the ATM 15. Said two-dimensional code 1 will be treated by the mobile device 2 and, once the two-dimensional code is decoded and the data are decrypted using the public key of the financial institution and the user's private key to obtain the session key, it will be presented directly to the ATM, for example through the keyboard 17, or transmitted by an online connection from the mobile device 2 to the financial institution, for its verification and acceptance of the service access application through the ATM.

The system using two-dimensional codes with encrypted data can be used to access banking services in ATMs with the presentation of the dynamic key, or with the transmission of the authentication data to the management system of the server of the financial institution.

On the other hand, the documents printed by the ATM could be used for the user certification and the performance of access to services, payments, etc.

Likewise, the model proposed for personal certification to perform ATM operations will be compatible with the use of the cryptographic card 3 (for example, electronic ID), as it was described above.

### 6. User certification system for the payment of services, show tickets, fines, fees, taxes, etc.

Another reference application of the system proposed consists of the use of the two-dimensional code with double encryption for the unequivocal identification of a service receipt, show ticket, fine, fee, tax, or any other document related to a payment.

In this way, the payment of the amount related thereto can be made through the presentation of the payment key, generated by the mobile device 2, or through an online connection of the mobile device to the client electronic banking system using the procedure described above for the user certification for secure access to online services.

The receipt or any other payment document can be seen both on the screen and on printed paper, so that the two-dimensional code with double encryption can be captured by the mobile device and, once the certification application is executed, the session key is presented or the data related to the operation are sent to the server in real time for its authorization.

The method proposed can be used for the payment of services, fees, taxes, etc., the payment document of which is issued as a printed document. Simply, it will be necessary to include the two-dimensional code linked to the payment, which incorporates the certification data, among other data, relating to the data required for the payment, that is: amount, date, time, product reference and provider or seller reference.

In this way, through the capturing of the two-dimensional code image printed in paper, and its later treatment, the user certification will be performed and the online connection with the service provider and through the corresponding payment systems will be facilitated, for the certification and later payment for the service or product. Likewise, the model proposed for the payment of tickets, among others, will be compatible with the use of the cryptographic card 3 (for example, electronic ID), as it was described above.

## Claims

1. Personal certification method with respect to a service provider using a mobile device, said mobile device (2) having image capturing means, **characterized in that** it comprises:
- providing the user of the mobile device (2) with a two-dimensional code (1), the information contained in said two-dimensional code (1) including encrypted original data which comprise an encrypted session key for certifying the user with respect to the service provider;
- the mobile device (2) obtaining an image containing the two-dimensional code (1) via image capturing means;
- the mobile device (2) obtaining the two-dimensional code (1) from said image;
- the two-dimensional code (1) being converted into a character code;
- the mobile device (2) obtaining, from said character code and by means of applying a decryption process, the original data including the session key for certifying the user before the service provider.

2. Method according to claim 1, **characterized in that** the two-dimensional code (1) is previously generated by the service provider applying an encryption process on the original data comprising the session key and a subsequent conversion of the characters obtained into a two-dimensional code.

3. Method according to any of the preceding claims, in which the two-dimensional code (1) is double encrypted, encrypted with the user's public key and the private key of the service provider, **characterized in that** the encryption process comprises:
- obtaining, from the character code, the encrypted original data including the encrypted session key;
- decrypting the original data with the service provider public key;
- decrypting the previous result with the mobile device (2) user's private key, obtaining the original data including the session key.

4. Method according to the preceding claim, **characterized in that** the process for generating the two-dimensional code (1) is performed by the service provider and comprises:
- randomly generating a session key;
- encrypting the original data including said session key with the user's public key;
- encrypting the result with the service provider private key;
- performing a two-dimensional encoding of the previous result, obtaining the two-dimensional code (1) including the encrypted original data which in turn comprise the encrypted session key.

5. Method according to any of the preceding claims, **characterized in that** it additionally comprises:
- showing the obtained session key to the user on the display of his/her mobile device (2);
- introducing the obtained session key in a terminal (4, 11, 12, 15) in charge of allowing the certification for the service provider.

6. Method according to any of the preceding claims, **characterized in that** it additionally comprises:
- the mobile device (2) establishing a secure connection with a server of the service provider;
- the mobile device (2) sending information for the user certification, including in said information at least the obtained session key.

7. Method according to any of the preceding claims, **characterized in that** the decryption process is performed by a cryptographic card (3) connected to the mobile device (2).

8. Method according to any of the preceding claims, **characterized in that** the encrypted original data contained in the two-dimensional code (1) may further comprise some of the following data:
- reference to the service or product;
- reference to the service provider;
- operation amount;
- date and time of the operation;
- service provider webpage address.

9. Personal certification system with respect to a service provider using a mobile device, said mobile device (2) having image capturing means, **characterized in that** it comprises said mobile device (2) configured to:
- obtaining, through the image capturing means and from a two-dimensional code (1) provided to the mobile device (2) user and which includes encrypted original data comprising an encrypted session key for performing the user certification before the service provider, an image containing said two-dimensional code (1);
- obtaining from said image the two-dimensional code (1);
- converting the two-dimensional code (1) into a character code;
- obtaining, from said character code and applying a decryption process, the original data including the session key for performing the user certification before the service provider.

10. System according to claim 9, **characterized in that** it comprises a server of the service provider configured to generate the two-dimensional code (1) through an encryption process on the original data comprising the session key and a conversion of the characters obtained into a two-dimensional code.

11. System according to any of the claims 9-10, in which the two-dimensional code (1) is double encrypted, encrypted with the user's public key and the private key of the service provider, **characterized in that** the mobile device is configured, within the encryption process, to:
- obtain, from the character code, the encrypted original data including the encrypted session key;
- decrypt the original data with the service provider public key;
- decrypt the previous result with the mobile device (2) user's private key, obtaining the original data including the session key.

12. System according to claims 10 and 11, **characterized in that** the server of the service provider is configured, within the process for generating the two-dimensional code (1), to:
- randomly generate a session key;
- encrypt the original data including said session key with the user's public key;
- encrypt the result with the service provider private key;
- perform a two-dimensional encoding of the previous result, obtaining the two-dimensional code (1) including the encrypted original data which in turn comprise the encrypted session key.

13. System according to any of the claims 10 or 11-12, when they depend on 10, **characterized in that** it comprises a terminal (4, 11, 12, 15) in charge of allowing the certification for the service provider, with display means (5, 9, 13, 16) configured to show the two-dimensional code (1) to the user and with data entering means (7, 14, 17, 18) configured to allow the entering of the session key to obtain the user certification.

14. System according to any of the claims 10-13, **characterized in that** the mobile device (2) is additionally configured to:
- establish a secure connection with a server of the service provider;
- send information for the certification of the user, including in said information at least the session key obtained.

15. System according to any of the claims 10-14, **characterized in that** the mobile device (2) is configured to perform the decryption process through a cryptographic card (3) connected to the mobile device (2).
